(19)

**Europäisches Patentamt**

**European Patent Office**

**Office européen des brevets**

(11) **EP 2 894 608 A1**

(12) **EUROPEAN PATENT APPLICATION**
published in accordance with Art. 153(4) EPC

(43) Date of publication:
**15.07.2015 Bulletin 2015/29**

(21) Application number: **12884241.6**

(22) Date of filing: **05.09.2012**

(51) Int Cl.:
*G06T 19/00* (2011.01)     *G06F 3/048* (2013.01)

(86) International application number:
**PCT/JP2012/005613**

(87) International publication number:
**WO 2014/037972 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NEC CASIO Mobile Communications, Ltd.**
**Kawasaki-shi, Kanagawa 211-8666 (JP)**

(72) Inventor: **MIURA, Nariaki**
**Kawasaki-shi**
**Kanagawa 211-8666 (JP)**

(74) Representative: **Vossius & Partner**
**Patentanwälte Rechtsanwälte mbB**
**Siebertstrasse 3**
**81675 München (DE)**

(54) **DISPLAY DEVICE, DISPLAY METHOD, AND PROGRAM**

(57)    [**PROBLEM TO BE SOLVED**] display of an image according to a line-of-sight direction of a viewing person who views a screen can be allowed.

[**SOLUTION**] A central control section 1 determines a line-of-sight direction of a viewing person based on an image captured by an in-camera 8 for capturing an image of the viewing person who faces a display section 6 ; generates an image as being viewed from the line-of-sight direction of the viewing person who faces this display section 6 and views its screen; and displays the generated image on the display section 6. With this, when the line-of-sight direction with respect to the image being displayed is changed, the image can be changed to an image as being viewed from the changed line-of-sight direction.

FIG. 1

**EP 2 894 608 A1**

## Description

## TECHNICAL FIELD

The present invention relates to a display device, a display method, and a program for displaying an image.

## BACRGROUND ART

Conventionally, there have been various techniques for providing a user (viewing person) with stereoscopic viewing by 3D (three-dimensional) display of images such as images (still images and moving images) on a flat display section. For example, there is a technique of providing a visual effect so that an object in a two-dimensional (2D) image is displayed in a stereoscopic manner. Note that a technique using polygons is one of these techniques. Also, there is a technique using binocular disparity between the right eye and the left eye of the viewing person. That is, in this technique, an image for the right eye and an image for the left eye slightly misaligned with each other are provided, and an electronic parallax barrier (switching liquid crystal panel) for interrupting an optical route is arranged at an appropriate position so as to make the image for the right eye viewable by the right eye but not viewable by the left eye and the image for the left eye viewable by the left eye but not viewable by the right eye when these two images are simultaneously displayed. As a result, the images can be displayed as stereoscopic. However, this technique has problems in which an expensive liquid-crystal display device for 3D is required and the viewing angle is restricted and very narrow.

As a technique for stereoscopically viewing an image without using a 3D-dedicated display device as described above, for example, a technique (game device) is known in which a rotation angle of a housing about each of an X axis, a Y axis, and Z axis is detected and an image according to each rotation angle is three-dimensionally displayed (refer to Patent Document 1).

## PRIOR ART DOCUMENT

## PATENT DOCUMENT

Patent Document 1: JP 2002-298160

## SUMMARY OF INVENTION

## Problem to be Solved by the Invention

However, in the above-described related technique (technique of Patent Document 1), an image in a display section is changed by performing an operation that an operator tilts a housing, and this technique is based on an assumption that the housing is moved. Moreover, the operator cannot grasp how the image is changed by the direction in which and the degree to which the housing is tilted unless performing many operations, and it takes considerable time to get accustomed to using the technique. Furthermore, even if the line-of-sight direction is changed such that the displayed image is peered into from an arbitrary direction such as above, below, left, or right, as well as an actual object is peered into by changing a line-of-sight direction, the image cannot be changed unless the housing is moved.

An object of the present invention is to display an image according to a line-of-sight direction of a viewing person who views a screen.

## Means for Solving the Problem

To solve the above-described problem, an aspect of the present invention provides a display device comprising:

a display device comprising:

a display means which displays an image;
a line-of-sight direction determining means which determines a line-of-sight direction of a viewing person who faces the display means and views a screen thereof;
an image generating means which generates an image as being viewed from the line-of-sight direction determined by the line-of-sight direction determining means; and
a display control means which displays the image generated by the image generating means on the display means.

To solve the above-described problem, another aspect of the present invention provides a program causing a computer to actualize functions comprising:

a function of determining a line-of-sight direction of a viewing person who faces display means which displays an image and views a screen thereof;
a function of generating an image as being viewed from the determined line-of-sight direction; and
a function of displaying the generated image on the display means.

## Effect of the Invention

According to the present invention, an image according to a line-of-sight direction of a viewing person who views a screen can be displayed, and it is possible to achieve image display with enhanced reality without using a specific display device for 3D.

**BRIEF DESCRIPTION OF DRAWINGS**

FIG. 1 is a block diagram depicting basic components of a cellular phone apparatus to which the present invention is applied as a display device.

FIG. 2 is an external perspective view of the cellular phone apparatus.

FIG. 3(1) is a diagram depicting image data of a three-dimensional model (three-dimensional model image), and FIG. 3(2) is a diagram depicting a case where the three-dimensional model image displayed on a display section 6 is viewed from a horizontal direction.

FIG. 4(1) is a diagram depicting a case where a three-dimensional model image displayed on the display section 6 is viewed from a diagonally upper direction (in the drawing, a diagonally upper direction by 30°), and FIG. 4(2) is a diagram depicting a case where the image is viewed from a diagonally lower direction (in the drawing, a diagonally lower direction by 30°).

FIG. 5 is a flowchart depicting a line-of-sight display control process of changing a display image according to a line-of-sight direction of a viewing person.

FIG. 6 is a flowchart depicting operations subsequent to FIG. 5.

FIG. 7 is a diagram depicting a case where the position of the eyes of the viewing person is "shifted" in an up and down direction (vertical direction) with respect to an optical axis (horizontal) direction of an in-camera 8.

FIG. 8 is a diagram depicting a case where the optical axis of the in-camera 8 and the screen center position of the display section 6 are "shifted" from each other.

FIG. 9(1) is a diagram depicting coordinate values and an angle that are changed according to a positional relation between the viewing person and the in-camera 8, and FIG. 9(2) is a diagram depicting coordinate values in a captured image obtained by capturing an image of the viewing person.

FIG. 10 is a diagram for describing a second embodiment.

FIG. 11 is a functional block diagram for describing functions of the present invention.

**DESCRIPTION OF EMBODIMENTS**

Embodiments of the present invention will be described below with reference to the drawings.

(First Embodiment)

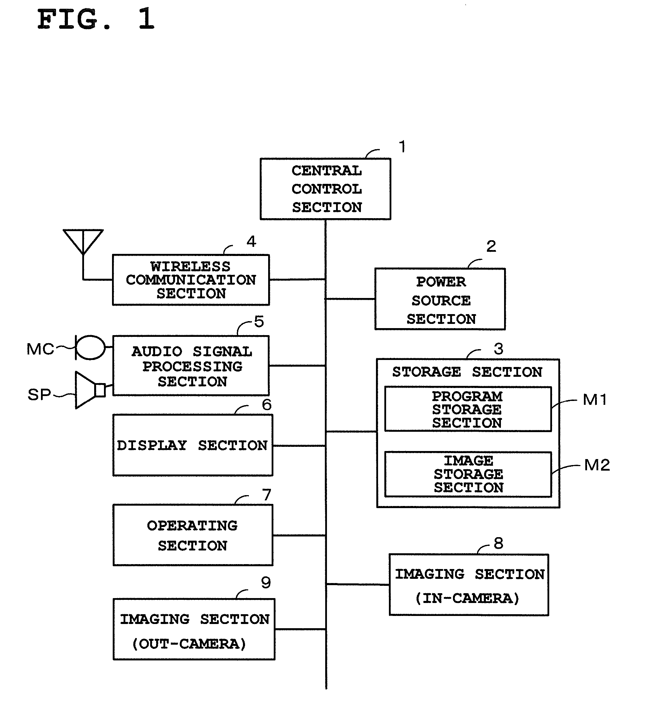

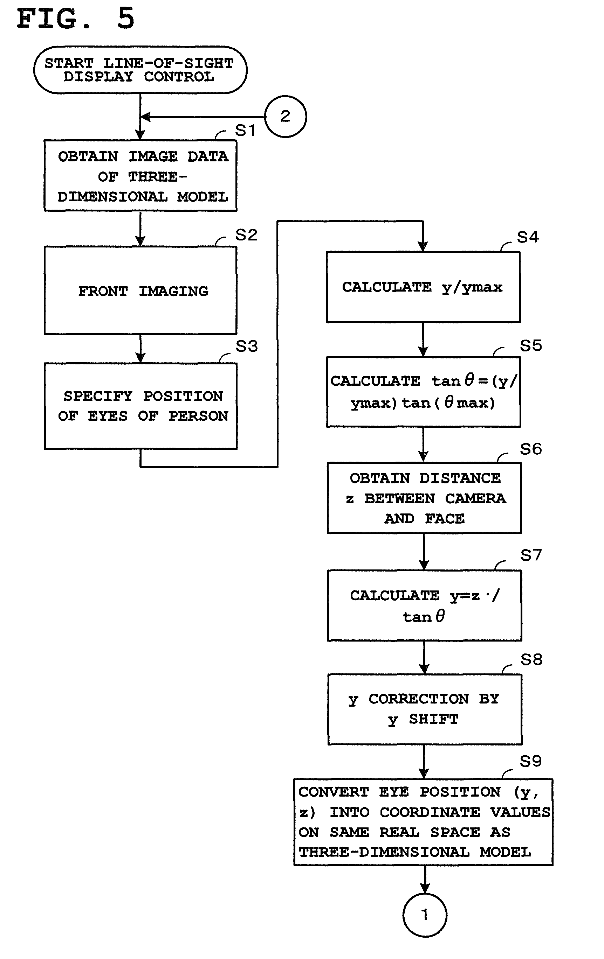

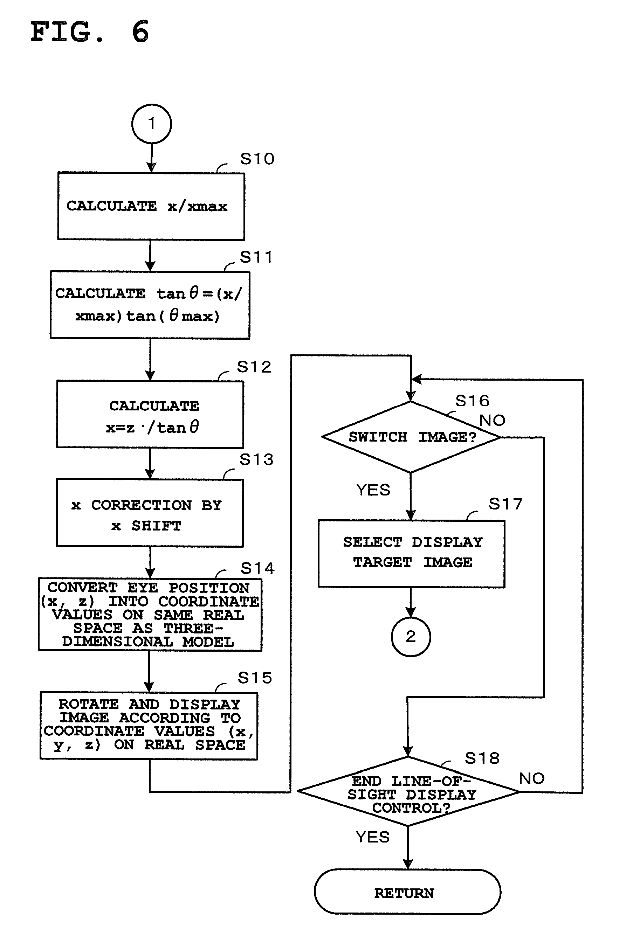

A first embodiment of the present invention will be first described with reference to FIG. 1 to FIG. 9.
This embodiment is exemplified by a case where the present invention is applied as a display device to a cellular phone apparatus, and FIG. 1 is a block diagram depicting basic components of this cellular phone apparatus.
The cellular phone apparatus includes an audio call function for calling by transmitting and receiving audio data, as well as a TV (television) telephone function for calling by transmitting and receiving real-time images (a partner image and a self image) other than audio, whereby calling by TV telephone with a partner side can be allowed. Furthermore, the cellular phone apparatus includes a camera function, an electronic mail function, an Internet connecting function, and the like.
A central control section 1 operates by electric power supply from a power source section 2 with a secondary battery, and has a central processing unit which controls an entire operation of this cellular phone apparatus according to various programs in a storage section 3, a memory, and the like. This storage section 3 is provided with a program storage section M1, an image storage section M2, and the like. Note that the storage section 3 is not limited to an internal storage section and may include a removable portable memory (recording medium) such as an SD card or an IC card and may include a storage area on a certain external server that is not illustrated. The program storage section M1 stores a program and various applications that are used to realize the present embodiment according to an operation procedure depicted in FIG. 5 and FIG. 6, as well as information that is required for the realization. The image storage section M2 stores images captured by the camera function, images downloaded from the Internet, and the like.
A wireless communication section 4 transmits and receives data to and from the nearest base station at the time of operation of the calling function, the electronic mail function, the Internet connecting function, or the like. At the time of operation of the calling function, the wireless communication section 4 takes in a signal from a reception side of a baseband section, and demodulates the signal into a reception baseband signal, and then outputs audio from a call speaker SP through an audio signal processing section 15; and takes in input audio data from a call microphone MC through the audio signal processing section 5, encodes the audio data into a transmission baseband signal, then gives the encoded transmission baseband signal to a transmission side of the baseband section, and transmits and outputs the signal through an antenna. A display section 6 is, for example, a high-definition liquid-crystal or organic EL (Electro Luminescence) display, and displays character information, a standby image, images, and the like.
An operating section 7 is used to perform dial-input, text-input, command-input, etc. The central control section 1 performs processing based on input operation signals from this operating section 7. An in-camera 8 is arranged on a front surface side of a housing forming the cellular phone apparatus, and is a camera imaging section for TV telephone which captures an image of a user's (viewing person's) own face. Also, an out-camera 9 is arranged on a rear surface side of the housing, and is a camera imaging section which captures an image of the outside. The in-camera 8 and the out-camera 9 each include a lens mirror block such as a taking lens and a mirror, an imaging element, and its driving system, as well as a distance sensor, a light quantity sensor, an analog processing circuit, a signal processing circuit, a compression and expansion circuit, and the like, and controls the adjustment of optical zoom and the driving of an autofocus function.

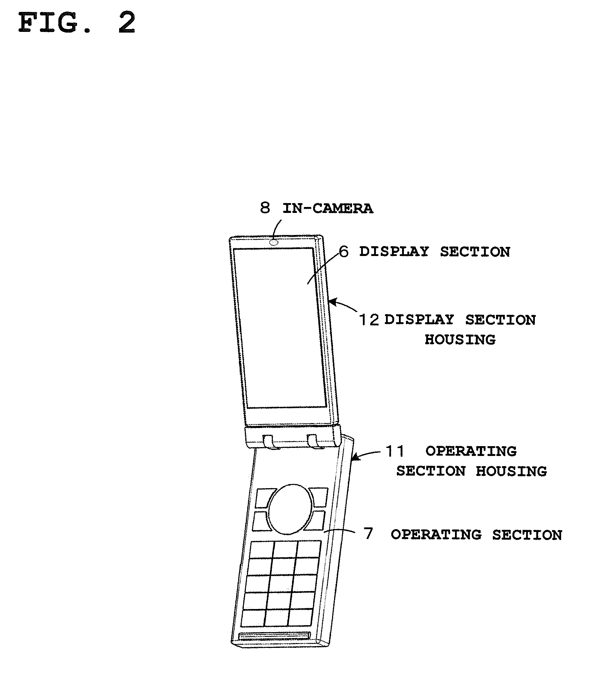

FIG. 2 is an external perspective view of the cellular phone apparatus.

In the cellular phone apparatus, two housings (an operating section housing 11, a display section housing 12) are openably and closably (foldably) mounted. In a state where these two housings 11 and 12 are open (open style), the operating section 7 is arranged on a front surface side of the operating section housing 11, and the display section 6 is arranged on a front surface side of the display section housing 12 and the in-camera 8 is arranged near the display section 6. In this case, as depicted in the drawing, in a state of a portrait screen orientation with the display section 6 vertically oriented, the in-camera 8 is arranged near one end side in a longitudinal direction (an upper side in the drawing), thereby capturing an image of the face of the viewing person (user) who faces the display section 6 and views its screen.

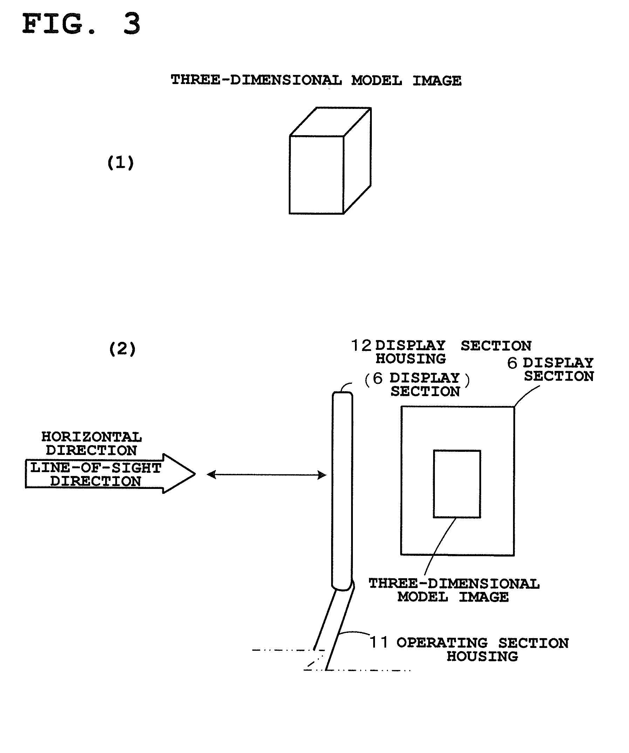

FIG. 3(1) is a diagram which exemplarily depicts image data of a three-dimensional model (three-dimensional model image). Although a rectangular parallelepiped figure is depicted in the depicted example, a character or the like may be used. FIG. 3(2) depicts a case where the three-dimensional model image displayed on the screen of the display section 6 is viewed from a horizontal direction, and the three-dimensional model image is displayed with only its front surface portion viewable.

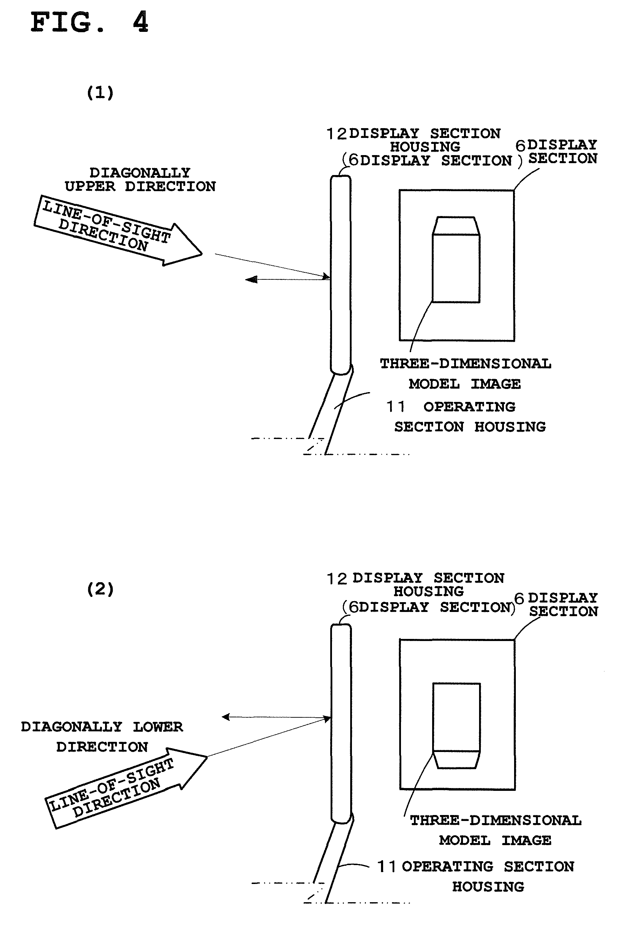

By contrast, FIG. 4(1) depicts a case where the three-dimensional model image displayed on the screen of the display section 6 is viewed from a diagonally upper direction (in the drawing, a diagonally upper direction by 30°), and the three-dimensional model image is displayed with its front surface portion and upper surface portion viewable. FIG. 4(2) depicts a case where the image is viewed from a diagonally lower direction (in the drawing, a diagonally lower direction by 30°), and the three-dimensional model image is displayed with its front surface portion and lower surface portion viewable. As such, in the present embodiment, the way in which the three-dimensional model image is viewed is changed according to the line-of-sight direction of the viewing person who faces the display section 6 and views its screen.

When a predetermined user operation is performed in a state where two housings 11 and 12 are open (open style), that is, when a an instruction for performing a process of changing a display image according to the line-of-sight direction of the viewing person (a line-of-sight display control process) is provided by a user operation, the central control section 1 causes the in-camera 8 to capture an image of the viewing person who views the display section 6, and then analyzes this captured image and specifies the position of the eyes of the viewing person. Then, the central control section 1 determines the light-of-sight direction according to this position of the eyes, and generates an image as being viewed from this line-of-sight direction and displays the generated image on the display section 6. That is, when the line-of-sight direction is changed so that the displayed image is peered into from an arbitrary direction such as above, below, left, or right, as well as an actual object is peered into in a real space by changing the line-of-sight direction, an image as being viewed from the changed line-of-sight direction is generated and displayed.

Next, the operation concept of the cellular phone apparatus in the first embodiment will be described below with reference to flowcharts depicted in FIG. 5 and FIG. 6. Here, each function described in these flowcharts is stored in a readable program code format, and operations are sequentially executed in accordance with the program codes. FIG. 5 and FIG. 6 are flowcharts depicting characteristic operations of the first embodiment of entire operations of the cellular phone apparatus. After exiting the flows of FIG. 5 and FIG. 6, the procedure returns to a main flow (not depicted in the drawings) of the entire operation.

FIG. 5 and FIG. 6 are flowcharts depicting a line-of-sight display control process of changing a display image according to the line-of-sight direction of the viewing person.

First, the central control section 1 reads out a display target image (three-dimensional model image) from the image storage section M2 or the like (Step S1), and drives the in-camera 8 to perform front imaging (Step S2). In this case, an image of the viewing person who faces the display section 6 and views its screen is captured by the in-camera 8. Then, the central control section 1 analyzes this captured image, and thereby performs image recognition for specifying the position of the eyes of the viewing person (Step S3). Note that the positions of the face and the eyes are recognized by comprehensively determining the contour of the face, the shape and positional relation of parts (such as eyes, mouth, nose, and forehead) forming the face, and the like while analyzing the captured image. This image recognition function is a technique generally used in cameras, and its known technique is used in the present embodiment. Therefore, specific description of the technique is omitted herein.

Next, the line-of-sight direction of the viewing person is determined, and a process of converting the position of the eyes to coordinate values on the same space as the three-dimensional model image is performed on each of a Y axis and an X axis. In the flow of FIG. 5 and FIG. 6, a process on the Y axis (Step S4 to Step S9) is first performed, and then a process on the X axis is performed (Step S10 to Step S14 of FIG. 6). However, the process on the Y axis (Step S4 to Step S9) and the process on the X axis (Step S10 to Step S14 of FIG. 6) are basically similar to each other.

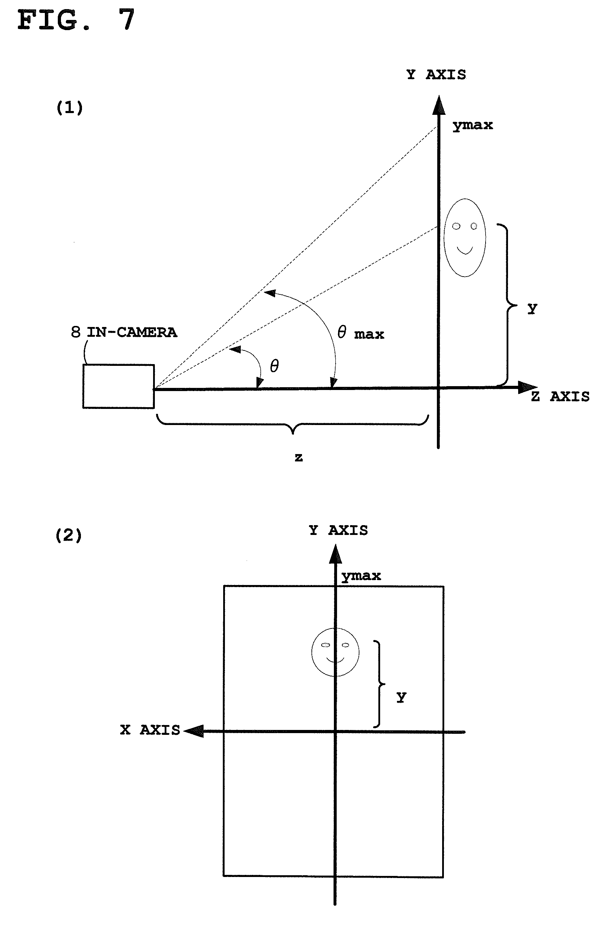

FIG. 7 is a diagram for describing the process on the Y axis; and illustrates a case where the position of the eyes of the viewing person is "shifted" in an up and down direction (vertical direction) with respect to an optical axis (horizontal) direction of the in-camera 8, and depicts that, when a direction perpendicular to the screen of the display section 6 (the optical axis direction of the in-camera 8) is taken as a Z axis (a third axis) of the three-dimensional coordinate system, an angle θ of the position of the eyes on the Y axis (a second axis) with respect to the Z axis represents the line-of-sight direction of the viewing person. Note that, while the X axis of the three-dimensional coordinate system is taken as the first axis, the Y axis thereof is taken as the second axis, and the Z axis thereof is taken as the third axis, the present embodiment is not limited to the relation among these (the same applies hereinafter). FIG. 7(1) is a diagram depicting coordinate values y and z and angles θ and θmax changed according to the positional relation between the viewing person and the in-camera 8, and FIG. 7(2) is a diagram depicting coordinate values y and ymax in the captured image of the viewing person. Note that, although not depicted in FIG. 7, the imaging plane (imaging element) of the in-camera 8 is flush with the display surface of the display section 6 and is in the same vertical plane.

First, when the process on the Y axis starts, the central control section 11 calculates y/ymax (Step S4). Here, y is a coordinate value on the Y axis corresponding to the position of the eyes, and ymax is a coordinate value on the Y axis corresponding to the angle of view (θmax) of the in-camera 8. In this case, although specific numerical values of y and ymax are unknown, the ratio between y and ymax (y/ymax) can be handled as known values. Therefore, by using this known value and the fixed value θmax of the in-camera 8, the central control section 1 calculates the line-of-sight direction of the viewing person (the angle of the position of the eyes) θ and tanθ according to the following equation (Step S5).

$$\tan\theta=(y/ymax)\tan(\theta max)$$

Note that θ itself is found by an arc tangent or the like.

Next, a distance z on the Z axis from the in-camera 8 to the face of the viewing person is obtained (Step S6). In this case, in the present embodiment, the distance z is obtained by using the autofocus function of the in-camera 8. However, this function is a well-known technique generally used in cameras, and therefore description thereof is omitted. Note that the distance z from the in-camera 8 to the face of the viewing person may be roughly calculated from the distance between the left eye and the right eye in the captured image. Furthermore, the distance z from the in-camera 8 to the face of the viewing person may be roughly calculated from the size of the face in the captured image. Still further, the distance z may be determined as an arbitrary value set by a user operation, for example, uniform 30 cm. When the distance z from the in-camera 8 to the face of the viewing person in the real space is determined as described above, by using this distance z, the central control section 1 calculates the position y of the eye of the viewing person in the real space according to the following equation (Step S7).

$$y=z*\tan\theta$$

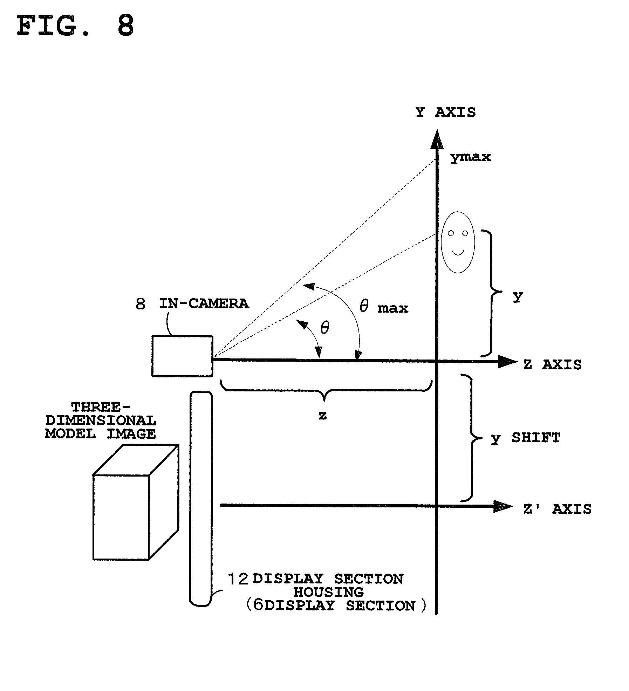

FIG. 8 is a diagram depicting a case where the optical axis of the in-camera 8 and the screen center position of the display section 6 are "shifted" from each other. When the optical axis of the in-camera 8 is "shifted" with respect to the screen center position of the display section 6 as described above and the value of a shift amount is taken as "y shift", the central control section 1 corrects the position y of the eye of the viewing person by "y shift" ("y shift" is added) (Step S8). After the position coordinates y and z of the eye in the real space are found as described above, the central control section 1 converts these position coordinates y and z into coordinate values on the same space as the three-dimensional model image (Step S9). For example, at the time of creating a three-dimensional model image (at the time of designing), the coordinate values y and z may be multiplied by the ratio determined by its developer. Note that, when the screen center position of the display section 6 is taken as the origin of the three-dimensional coordinate system, for example, if the z coordinate value when the three-dimensional model image is placed so as to be viewed 1 cm deep from the screen is determined as minus 1, values of y and z (unit: cm) may be found in consideration of the depth (1 cm) of the image.

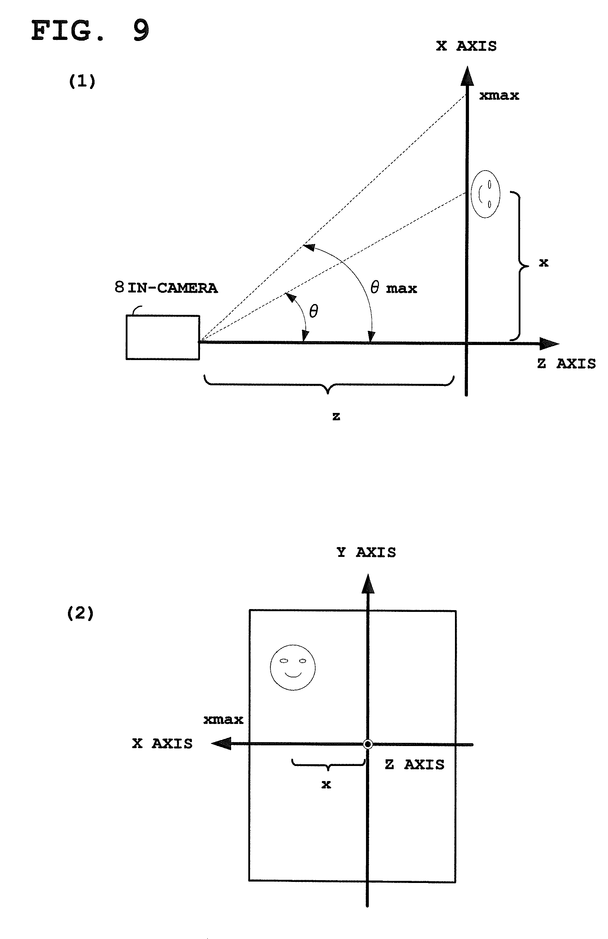

After the coordinate values y and z on the same space as the three-dimensional model image are found by the process on the Y axis (Step S4 to Step S9) as described above, the process on the X axis (Step S10 to Step S18) is performed. FIG. 9 illustrates a case where the position of the eyes of the viewing person is "shifted" in a right and left direction (horizontal direction) with respect to the optical axis (horizontal) direction of the in-camera 8, and depicts that, when a direction perpendicular to the screen of the display section 6 (the optical axis direction of the in-camera 8) is taken as a Z axis of the three-dimensional coordinate system, the angle θ of the position of the eyes on the X axis with respect to the Z axis represents the line-of-sight direction of the viewing person. FIG. 9(1) is a diagram depicting coordinate values x and z and angles θ and θ max changed according to the positional relation between the viewing person and the in-camera 8, and FIG. 9(2) is a diagram depicting coordinate values x and xmax in the captured image of the viewing person. Also in this case, note that the imaging plane (imaging element) of the in-camera 8 is flush with the display surface of the display section 6 and is in the same vertical plane.

First, the central control section 11 calculates x/xmax (Step S10). Here, x is a coordinate value on the Y axis corresponding to the position of the eyes, and xmax is a coordinate value on the X axis corresponding to the angle of view (θmax) of the in-camera 8. And, the central control section 1 calculates the line-of-sight direction of the viewing person (the angle of the position of the eyes) θ and tanθ according to the following equation (Step S11).

$$\tan\theta = (x/xmax)\tan(\theta max)$$

Note that θ itself is found by an arc tangent or the like.

Next, based on the distance z from the in-camera 8 to the face of the viewing person on the Z axis obtained at above-described Step S6, the central control section 1 calculates the position x of the eyes of the viewing person in the real space according to the following equation (Step S12).

$$x = z*\tan\theta$$

Then, when the optical axis of the in-camera 8 is "shifted" with respect to the screen center position of the display section 6 and its shift amount is taken as an "x shift", the central control section 1 corrects the position x of the eyes of the viewing person by "x shift" ("x shift" is added) (Step S13). After the position coordinates x and z of the eye in the real space are found as described above, the central control section 1 converts these position coordinates x and z into coordinate values on the same space as the three-dimensional model image (Step S14).

After the coordinate values (the position of the eyes) x, y, and z on the same space as the three-dimensional model image are found as described above, the central control section 1 rotates the three-dimensional model image on the three-dimensional coordinate system so that the three-dimensional model image is viewed from the position of the eyes; and displays the image after rotation on the display section 6 (Step S15). Then, the central control section 1 checks whether an instruction for switching the image has been provided (Step S16) and checks whether an instruction for ending line-of-sight display control has been provided (Step S18). Here, for example, when a switching operation by user (viewing person) operation has been performed or when a lapse of a predetermined time has been detected at the time of slide show display (YES at Step S16), a display target image (three-dimensional model image) is selected (Step S17), and then the procedure returns to Step S1 in FIG. 5 to repeat the above-described operations. Also, when an end operation by user (viewing person) operation has been performed or when a lapse of a slide show end time has been detected at the time of slide show display (YES at Step S18), the procedure exits the flows of FIG. 5 and FIG. 6.

As described above, in the first embodiment, an image as being viewed from the line-of-sight direction of the viewing person who faces the display section 6 and views the screen is generated and displayed. Therefore, an image according to the line-of-sight direction can be displayed. The viewing person can view an image like 3D display even if a specific display device for 3D is not used, and it is possible to achieve image display with enhanced reality.

Also, when the line-of-sight direction with respect to the screen is changed so that the displayed image is peered into from an arbitrary direction such as above, below, left, or right, as well as an actual object in a real space is peered into by changing the line-of-sight direction, the image is changed to an image as being viewed from the changed line-of-sight direction. Therefore, in a state where a certain character is displayed on the entire display section 6, if the viewing person desires to peer into that character from below and takes action such as approaching the screen and viewing the character from below, the image can be changed to an image as being peer into from below.

The line-of-sight direction of the viewing person is determined based on the image captured by the in-camera 8 which captures an image of the viewing person who faces the display section 6. Therefore, the line-of-sight direction of the viewing person can be reliably and easily determined by image recognition.

By analyzing the image captured by the in-camera 8, the position of the eyes of the viewing person. Also, when a direction perpendicular to the screen of the display section 6 is taken as a Z axis in the three-dimensional coordinate system, an angle of the position of the eyes on the Y axis with respect to the Z axis and an angle of the position of the eyes on the X axis with respect to the Z axis are determined as the line-of-sight direction of the viewing person. By rotating the image data of the three-dimensional model based on this line-of-sight direction, an image as being viewed from the line-of-sight direction is generated. Therefore, an image as being viewed from the line-of-sight direction can be obtained merely by rotating the image data of the three-dimensional model.

Additionally, the position of the eyes of the viewing person is specified based on the line-of-sight direction of the viewing person and the distance from the display section 6 to the viewing person, and an image as being viewed from the position of the eyes is generated. Therefore, the viewing person is not required to keep a distance for viewing the image constant. Even if an object is viewed from far away or nearby, an image of the object as being viewed from that position is displayed. Therefore, the viewing person is not required to pay attention to the distance from the display section 6.

(Second Embodiment)

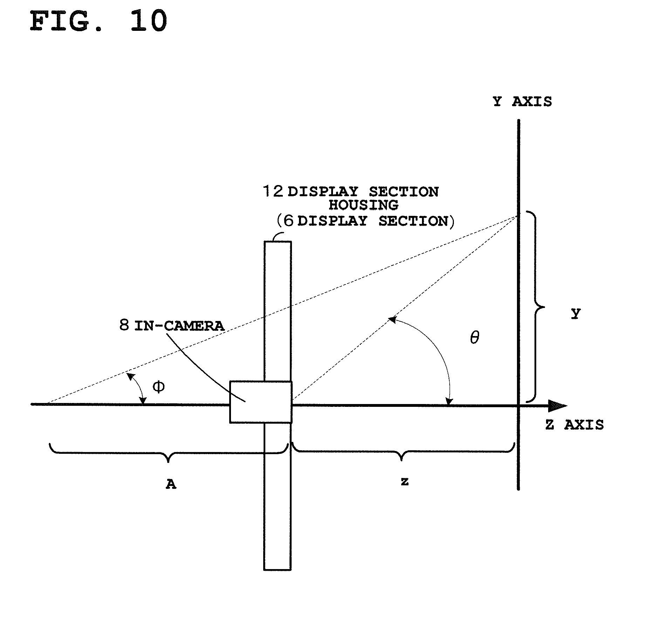

A second embodiment of the present invention will be described below with reference to FIG. 10.

In the above-described first embodiment, the angle θ from the screen of the display section 6 to the position of the eyes of the viewing person and tan θ are found. However, in the second embodiment, in consideration of a depth from the screen of the display section 6 to the position of the display image for each image, an angle Φ from each image with a depth to the position of the eyes of the viewing person and tan Φ are found. Here, sections that are basically the same or have the same name in both embodiments are given the same reference numerals, and therefore explanations thereof are omitted. Hereafter, the characteristic portion of the second embodiment will mainly be described.

FIG. 10 is a diagram for describing an angle θ from the screen of the display section 6 to the position of the eyes of the viewing person and an angle Φ from an image with a depth to the position of the eyes of the viewing person. Here, when the position of the eyes of the viewing person is "shifted" in an up and down direction (vertical direction) with respect to an optical axis (horizontal) direction of the in-camera 8, a direction perpendicular to the screen of the display section 6 (the optical axis direction of the in-camera 8) is taken as a Z axis of the three-dimensional coordinate system, the angle θ of the position of the eyes on the Y axis with respect to the Z axis represents the line-of-sight direction of the viewing person. And, after the angle θ from the screen of the display section 6 to the position of the eyes of the viewing person is found, the angle Φ from the image with a depth to the position of the eyes of the viewing person is found. Here, in the drawing, A represents a depth (a known value) from the screen of the display section 6 to the image.

That is,

$$\tan\theta = y/z \quad \ldots \quad (1)$$

$$\tan\Phi = y/(z+A) \quad \ldots \quad (2)$$

Since y is common in both of these equation (1) and (2), $z\tan\theta = (z+A)*\tan\Phi$

Therefore, $\tan\Phi = (z/(z+A))*\tan\theta$

Here, since z and θ can be found in a similar manner to that of the above-described first embodiment, the angle Φ from the image with a depth to the position of the eyes of the viewing person can be found. Here, when a plurality of images with depths from the screen of the display section 6 are displayed, the angle Φ from each image with a depth to the position of the eyes of the viewing person is found in consideration of the depth to each image for each image. Note that, while FIG. 10 depicts that an angle of the position of the eyes on the Y axis with respect to the Z axis is found, an angle of the position of the eyes on the X axis with respect to the Z axis can be found basically in a similar manner.

As described above, in the second embodiment, the angle from the image with a depth to the position of the eyes of the viewing person is taken as a line-of-sight direction in consideration of the depth from the screen of the display section 6 to the image. Therefore, even if an image has a depth, an angle (line-of-sight direction) can be found. As well as an actual object in a real space is peered into by changing the line-of-sight direction, the image can be changed to an image as being viewed from the line-of-sight direction of the viewing person.

Also, when a plurality of images with depths from the screen of the display section 6 are displayed, an angle from each image with a depth to the position of the eyes of the viewing person is found in consideration of the depth to each image for each image. Therefore, the way of viewing is changed for each image, and image display with enhanced reality is further possible.

Note that, while an angle of the position of the eyes on the Y axis with respect to the Z axis is found and also an angle of the position of the eyes on the X axis with respect to the Z axis is found in each of the above-described embodiments, either one may be found. That is, it is possible that looking only in the up and down direction or looking only in the right and left direction can be allowed.

Also, when the angles θ and Φ of the position of the eyes reach a predetermined angle or more (for example, 70° or more), an image on a rear side of the rectangular parallelepiped may be generated and displayed, or an image of the contents of the rectangular parallelepiped figure, for example, an image inside a house if the rectangular parallelepiped is an appearance model of the house, may be generated and displayed.

Furthermore, in each of the above-described embodiments, the line-of-sight direction of the viewing person is specified with respect to the in-camera 8, and the three-dimensional model image is rotated and displayed so that the three-dimensional model image is viewed from the position of the eyes. Alternatively, for example, in a state where a virtual camera may be set at positions y and z of the eyes of the viewing person and the visual field of the virtual camera is oriented toward the screen of the display section 6, 3D rendering display (for example, OpenGL/Direct 3D) may be used to create an image while calculating the way in which the object is viewed.

In each of the above-described embodiments, the present invention is applied to a foldable type cellular phone apparatus. Alternatively, the present invention may be applied to a double axis type cellular phone apparatus, and any type can be used. Also, not only the in-camera 8 but also a camera (for example, an external device) separated from the cellular phone apparatus may be used to capture an image of the viewing person.

Still further, in each of the above-described embodiments, the case has been exemplarily described in which an image of the viewing person is captured and its line-of-sight direction is specified. Alternatively, for example, an angular velocity sensor, an acceleration sensor, or the like may be used to find a rotation angle of the housing and generate an image as being viewed from its direction.

In each of the above-described embodiments, the present invention is applied to a cellular phone apparatus as a display device. Alternatively, the present invention may be applied to a portable terminal device such as a digital camera (compact camera), a PDA (personal, portable information communication equipment), a music player, or a game machine. Furthermore, in addition to the portable terminal device, the present invention can be similarly applied to a television receiver, a personal computer (for example, a notebook PC, a tablet PC, or a desktop PC), or the like.

In addition, the "devices" or the "sections" described in the above-described first and second embodiments are not required to be in a single housing and may be separated into a plurality of housings by function. Furthermore, the steps in the above-described flowcharts are not required to be processed in time-series, and may be processed in parallel, or individually and independently.

A part or all of the above-described embodiments can be described as in the following Supplementary Notes, however, the embodiments are not limited to the Supplementary Notes.

Hereinafter, several embodiments the present invention are summarized in the Supplementary Notes described below.

(Supplementary Note 1)

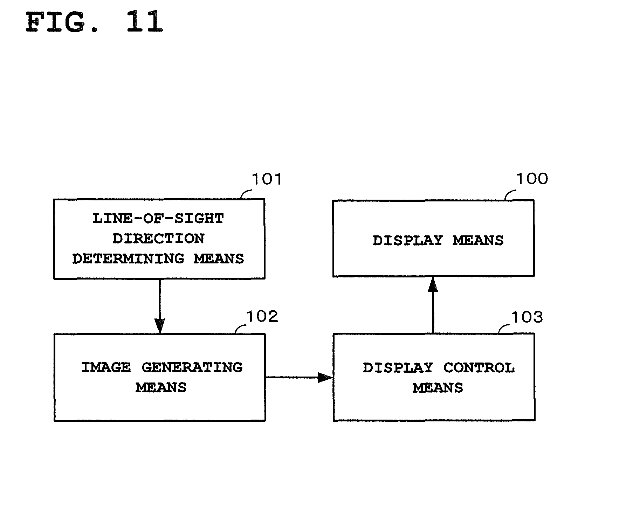

FIG. 11 is a configuration diagram (functional block diagram of the present invention) of Supplementary Note 1.

As depicted in the drawing, the invention described in Supplementary Note 1 is a display device comprising:

a display means 100 (in FIG. 1, a display section 6) which displays an image;
a line-of-sight direction determining means 101 (in FIG. 1, a central control section 1, an in-camera 8, and a program storage section M2) which determines a line-of-sight direction of a viewing person who faces the display means 100 and views a screen thereof;
an image generating means 102 (in FIG. 1, the central control section 1, the program storage section M2 , and an image storage section M2) which generates an image as being viewed from the line-of-sight direction determined by the line-of-sight direction determining means 101; and
a display control means 103 (in FIG. 1, the central control section 1, the program storage section M2, and the display section 6) which displays the image generated by the image generating means 102 on the display means 100.

According to Supplementary Note 1, an image as being viewed from the line-of-sight direction of the viewing person who faces the display means 100 and views its screen is generated and displayed. Therefore, an image according to the line-of-sight direction can be displayed. The viewing person can view an image as 3D display without using an expensive liquid-crystal display device for 3D, and it is possible to achieve image display with enhanced reality.

(Supplementary Note 2)

The display device according to Supplementary Note 1, wherein, when the line-of-sight direction with respect to the displayed image is changed, the image generating means generates an image as being viewed from the changed line-of-sight direction.

(Supplementary Note 3)

The display device according to Supplementary Note 1 or Supplementary Note 2, further comprising a imaging means which captures an image of the viewing person who faces the display means,
wherein the line-of-sight direction determining means determines the line-of-sight direction of the viewing person based on the image captured by the imaging means.

(Supplementary Note 4)

The display device according to Supplementary Note 3, wherein the line-of-sight direction determining means specifies a position of eyes of the viewing person by analyzing the image captured by the imaging means and, when a direction perpendicular to a screen of the display means is taken as a third axis of a three-dimensional coordinate system, determines an angle of the position of the eyes on a second axis with respect to the third axis as the line-of-sight direction of the viewing person.

(Supplementary Note 5)

The display device according to Supplementary Note 3 or Supplementary Note 3, wherein the line-of-sight direction determining means specifies a position of eyes of the viewing person by analyzing the image captured by the imaging means and, when a direction perpendicular to a screen of the display means is taken as a third axis of a three-dimensional coordinate system, determines an angle of the position of the eyes on a first axis with respect to the third axis as the line-of-sight direction of the viewing person.

(Supplementary Note 6)

The display device according to any one of Supplementary Note 1 to Supplementary Note 5, wherein, by rotating image data of a three-dimensional model based on the line-of-sight direction determined by the line-of-sight direction determining means, the image generating means generates the image as being viewed from the line-of-sight direction.

(Supplementary Note 7)

The display device according to any one of Supplementary Note 1 to Supplementary Note 6, further comprising a specifying means which specifies a position of eyes of the viewing person based on the line-of-sight direction of the viewing person determined by the line-of-sight direction determining means and a distance from the display means to the viewing person, wherein the image generating means generates the image as being viewed from the position of the eyes of the viewing person specified by the specifying means.

(Supplementary Note 8)

The display device according to any one of Supplementary Note 1 to Supplementary Note 7, wherein the line-of-sight direction determining means determines the line-of-sight direction of the viewing person in consideration of a depth of the image from the screen of the display means, and wherein the image generating means generates the image as being viewed from the line-of-sight direction by the line-of-sight direction determining means.

(Supplementary Note 9)

The display device according to Supplementary Note 8, wherein, when a plurality of images are displayed on the display means, the line-of-sight direction determining means determines the line-of-sight direction of the viewing person for each of the images in consideration of the depth from the screen for the each of the images, and wherein the image generating means generates, for the each of the images, an image as being viewed from the line-of-sight direction determined by the line-of-sight direction determining means for the each of the images.

(Supplementary Note 10)

A display method comprising:

determining a line-of-sight direction of a viewing person who faces display means which displays an image and views a screen thereof; generating an image as being viewed from the determined line-of-sight direction; and displaying the generated image on the display means.

(Supplementary Note 11)

A program causing a computer to actualize functions comprising:

a function of determining a line-of-sight direction of a viewing person who faces display means which displays an image and views a screen thereof; a function of generating an image as being viewed from the determined line-of-sight direction; and a function of displaying the generated image on the display means.

According to Supplementary Note 11, effects similar to those of Supplementary Note 1 can be achieved, and further, the functions in Supplementary Note 1 can be provided in the form of software (program).

**DESCRIPTION OF REFERENCE NUMERALS**

| | |
|---|---|
| 1 | central control section |
| 3 | storage section |
| 6 | display section |
| 7 | operating section |
| 8 | in-camera |
| 11 | operating section housing |
| 12 | display section housing |
| M1 | program storage section |
| M2 | image storage section |

**Claims**

**1.** A display device comprising:

a display means which displays an image; a line-of-sight direction determining means which determines a line-of-sight direction of a viewing person who faces the display means and views a screen thereof; an image generating means which generates an image as being viewed from the line-of-sight direction determined by the line-of-sight direction determining means; and a display control means which displays the image generated by the image generating means on the display means.

**2.** The display device according to claim 1, wherein, when the line-of-sight direction with respect to the displayed image is changed, the image generating means generates an image as being viewed from the changed line-of-sight direction.

**3.** The display device according to claim 1 or claim 2, further comprising a imaging means which captures an image of the viewing person who faces the display means,
wherein the line-of-sight direction determining means determines the line-of-sight direction of the viewing person based on the image captured by the imaging means.

**4.** The display device according to claim 3, wherein the line-of-sight direction determining means specifies a position of eyes of the viewing person by analyzing the image captured by the imaging means and, when a direction perpendicular to a screen of the display means is taken as a third axis of a three-dimensional coordinate system, determines an angle of the position of the eyes on a second axis with respect to the third axis as the line-of-sight direction of the viewing person.

**5.** The display device according to claim 3 or claim 4, wherein the line-of-sight direction determining means specifies a position of eyes of the viewing person by analyzing the image captured by the imaging means and, when a direction perpendicular to a screen of the display means is taken as a third axis of a three-dimensional coordinate system, determines an angle of the position of the eyes on a first axis with respect to the third axis as the line-of-sight direction of the viewing person.

**6.** The display device according to any one of claim 1 to claim 5, wherein, by rotating image data of a three-dimensional model based on the line-of-sight direction determined by the line-of-sight direction determining means, the image generating means generates the image as being viewed from the line-of-sight direction.

**7.** The display device according to any one of claim 1 to claim 6, further comprising a specifying means which specifies a position of eyes of the viewing person based on the line-of-sight direction of the viewing person determined by the line-of-sight direction determining means and a distance from the display means to the viewing person,
wherein the image generating means generates the image as being viewed from the position of the eyes of the viewing person specified by the specifying means.

**8.** The display device according to any one of claim 1 to claim 7,
wherein the line-of-sight direction determining means determines the line-of-sight direction of the viewing person in consideration of a depth of the image from the screen of the display means, and
wherein the image generating means generates the image as being viewed from the line-of-sight direction by the line-of-sight direction determining means.

**9.** The display device according to claim 8,
wherein, when a plurality of images are displayed on the display means, the line-of-sight direction determining means determines the line-of-sight direction of the viewing person for each of the images in consideration of the depth from the screen for the each of the images, and
wherein the image generating means generates, for the each of the images, an image as being viewed from the line-of-sight direction determined by the line-of-sight direction determining means for the each of the images.

**10.** A display method comprising:

determining a line-of-sight direction of a viewing person who faces display means which displays an image and views a screen thereof;
generating an image as being viewed from the determined line-of-sight direction; and
displaying the generated image on the display means.

**11.** A program causing a computer to actualize functions comprising:

a function of determining a line-of-sight direction of a viewing person who faces display means which displays an image and views a screen thereof;
a function of generating an image as being viewed from the determined line-of-sight direction; and
a function of displaying the generated image on the display means.

# FIG. 1

# FIG. 2

8 IN-CAMERA

6 DISPLAY SECTION

12 DISPLAY SECTION
HOUSING

11 OPERATING
SECTION HOUSING

7 OPERATING SECTION

# FIG. 3

THREE-DIMENSIONAL MODEL IMAGE

(1)

(2)

12 DISPLAY SECTION
HOUSING

6 DISPLAY
SECTION

(6 DISPLAY)
SECTION

HORIZONTAL
DIRECTION

LINE-OF-SIGHT
DIRECTION

THREE-DIMENSIONAL
MODEL IMAGE

11 OPERATING SECTION
HOUSING

# FIG. 4

(1)

DIAGONALLY
UPPER DIRECTION

LINE-OF-SIGHT
DIRECTION

12 DISPLAY SECTION
HOUSING
(6 DISPLAY SECTION )  6 DISPLAY
SECTION

THREE-DIMENSIONAL
MODEL IMAGE

11 OPERATING
SECTION HOUSING

(2)

DIAGONALLY LOWER
DIRECTION

LINE-OF-SIGHT
DIRECTION

12 DISPLAY SECTION
HOUSING
(6 DISPLAY SECTION) 6 DISPLAY
SECTION

THREE-DIMENSIONAL
MODEL IMAGE

11 OPERATING SECTION
HOUSING

# FIG. 5

```
        ╭─────────────────────╮
        │  START LINE-OF-SIGHT │
        │   DISPLAY CONTROL    │
        ╰─────────────────────╯
                  │              ⎛2⎞
                  │←─────────────
                  ▼           S1
        ┌─────────────────────┐
        │  OBTAIN IMAGE DATA   │
        │     OF THREE-        │
        │  DIMENSIONAL MODEL   │
        └─────────────────────┘
                  │
                  ▼           S2
        ┌─────────────────────┐
        │                     │
        │   FRONT IMAGING     │
        │                     │
        └─────────────────────┘
                  │
                  ▼           S3
        ┌─────────────────────┐
        │  SPECIFY POSITION    │
        │  OF EYES OF PERSON   │
        └─────────────────────┘
```

S4
CALCULATE $y/y_{max}$

S5
CALCULATE $\tan\theta = (y/y_{max})\tan(\theta_{max})$

S6
OBTAIN DISTANCE z BETWEEN CAMERA AND FACE

S7
CALCULATE $y = z\cdot/\tan\theta$

S8
y CORRECTION BY y SHIFT

S9
CONVERT EYE POSITION (y, z) INTO COORDINATE VALUES ON SAME REAL SPACE AS THREE-DIMENSIONAL MODEL

⎛1⎞

# FIG. 6

①

S10
CALCULATE x/xmax

S11
CALCULATE $\tan\theta = (x/xmax)\tan(\theta max)$

S12
CALCULATE
$x = z \cdot /\tan\theta$

S13
x CORRECTION BY
x SHIFT

S14
CONVERT EYE POSITION
(x, z) INTO COORDINATE
VALUES ON SAME REAL
SPACE AS THREE-
DIMENSIONAL MODEL

S15
ROTATE AND DISPLAY
IMAGE ACCORDING TO
COORDINATE VALUES (x,
y, z) ON REAL SPACE

S16
SWITCH IMAGE? — NO

YES

S17
SELECT DISPLAY
TARGET IMAGE

②

S18
END LINE-OF-
SIGHT DISPLAY
CONTROL? — NO

YES

RETURN

# FIG. 7

(1)

Y AXIS

ymax

8 IN-CAMERA

$\theta$ max

$\theta$

Z AXIS

z

y

(2)

Y AXIS

ymax

X AXIS

y

# FIG. 8

# FIG. 9

(1)

X AXIS

xmax

8 IN-CAMERA

$\theta$ max

$\theta$

x

Z AXIS

z

(2)

Y AXIS

xmax

X AXIS

Z AXIS

x

# FIG. 10

Y AXIS

12 DISPLAY SECTION
HOUSING
(6 DISPLAY SECTION)

8 IN-CAMERA

Φ

θ

y

Z AXIS

A

z

# FIG. 11

## INTERNATIONAL SEARCH REPORT

| | International application No. |
|---|---|
| | PCT/JP2012/005613 |

### A. CLASSIFICATION OF SUBJECT MATTER
G06T19/00(2011.01)i, G06F3/048(2006.01)i

According to International Patent Classification (IPC) or to both national classification and IPC

### B. FIELDS SEARCHED

Minimum documentation searched (classification system followed by classification symbols)
G06T19/00, G06F3/048

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-129775 A  (NTT Docomo Inc.),<br>05 June 2008 (05.06.2008),<br>paragraphs [0017] to [0060]; fig. 1 to 12<br>(Family: none) | 1-7,10-11<br>8-9 |
| Y | JP 2000-276613 A  (Sony Corp.),<br>06 October 2000 (06.10.2000),<br>paragraphs [0071] to [0078]; fig. 10<br>(Family: none) | 8-9 |
| A | JP 2008-078846 A  (Taro ISAYAMA),<br>03 April 2008 (03.04.2008),<br>paragraphs [0076] to [0116]; fig. 5 to 8<br>(Family: none) | 1-11 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 October, 2012 (19.10.12) | 30 October, 2012 (30.10.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/005613

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2002-298160 A  (Namco Ltd.),<br>11 October 2002 (11.10.2002),<br>paragraphs [0089] to [0111]; fig. 6 to 7<br>(Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002298160 A